Europäisches Patentamt

European Patent Office

Office européen des brevets

(19)

(11) **EP 0 944 844 B1**

(12) **FASCICULE DE BREVET EUROPEEN**

(45) Date de publication et mention
de la délivrance du brevet:
**04.07.2001 Bulletin 2001/27**

(21) Numéro de dépôt: **97950238.2**

(22) Date de dépôt: **05.12.1997**

(51) Int Cl.⁷: **G01S 15/89**

(86) Numéro de dépôt international:
**PCT/FR97/02220**

(87) Numéro de publication internationale:
**WO 98/26310 (18.06.1998 Gazette 1998/24)**

(54) **SONAR LATERAL A ANTENNE SYNTHETIQUE**

SEITENSICHTSONAR MIT SYNTHETISCHER APERTUR

SIDE SCAN SONAR WITH SYNTHETIC ANTENNA

(84) Etats contractants désignés:
**DE GB**

(30) Priorité: **10.12.1996 FR 9615157**

(43) Date de publication de la demande:
**29.09.1999 Bulletin 1999/39**

(73) Titulaire: **THOMSON MARCONI SONAR SAS
06900 Sophia Antipolis (FR)**

(72) Inventeur: **PINTO, Marc, Thomson-CSF S.C.P.I.
F-94117 Arcueil Cedex (FR)**

(74) Mandataire: **Desperrier, Jean-Louis et al
Thomson-CSF Propriété Intellectuelle,
Département Protection et Conseil TPI/PC,
13, avenue du Prés. Salvador Allende
94117 Arcueil Cédex (FR)**

(56) Documents cités:
**FR-A- 2 675 587        US-A- 4 510 586
US-A- 4 596 007        US-A- 5 412 617**

**Description**

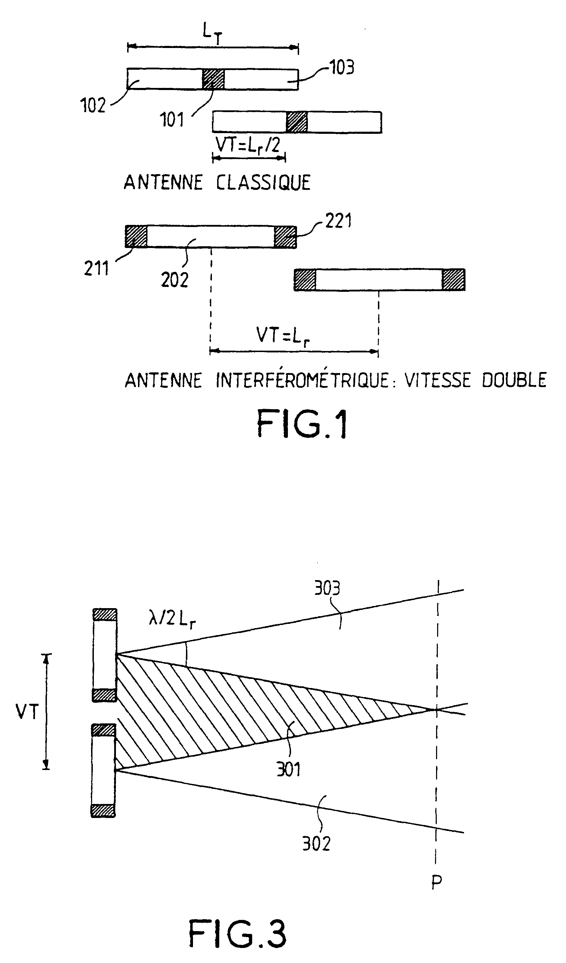

La présente invention se rapporte aux sonars latéraux à antenne synthétique qui permettent d'obtenir une image sonar en balayant le sein des eaux par le travers du bateau qui transporte ou remorque le sonar et en utilisant les échos des signaux émis par une antenne d'émission telle que l'antenne 101 sur la figure 1 pour plusieurs positions successives du bateau.

On connaît les antennes synthétiques dans lesquelles on forme une antenne virtuelle à partir des N différentes positions spatiales d'une antenne physique telle que l'antenne 102 sur la figure 1. Le rôle de l'antenne physique est d'une part d'assurer une réjection suffisante des lobes de réseau de l'antenne physique en les plaçant dans les zéros de directivité de l'antenne physique (première condition), et d'autre part d'assurer un gain de directivité suffisant dans la direction du point de focalisation pour N récurrences successives intégrées (deuxième condition).

On notera que l'antenne 101 peut ou non faire partie de l'antenne physique 102.

La première condition nécessite une directivité angulaire de l'antenne physique au moins égale à la période angulaire des lobes de réseau. Celle-ci est égale à $\frac{\lambda}{2vT}$, où T est la période inter-récurrence, $\lambda$ la longueur d'onde d'émission et v la vitesse du bateau porteur du sonar. Ceci conduit à la condition d'échantillonnage bien connue :

$$\frac{\lambda}{L} \leq \frac{\lambda}{2vT} \Rightarrow L \geq 2vT \tag{1}$$

La période inter-récurrence T étant fixée par la portée maximale du sonar, (1) limite le produit de la vitesse par la portée maximale, c'est-à-dire la couverture horaire du sonar à antenne synthétique.

La deuxième condition fixe la valeur maximale de N, et donc la résolution du sonar à antenne synthétique.

Ainsi, dans le cas simple où les directivités à l'émission et à la réception de l'antenne physique sont identiques et égales à :

$$D_e(u) = D_r(u) = \text{sinc}\left(\frac{L}{\lambda} u\right) \tag{2}$$

avec u = sin θ où θ est le gisement et avec la définition sinc (u) = $\frac{\sin(\pi u)}{(\pi u)}$, la longueur de l'antenne synthétique est limitée à:

$$L_s = \frac{\lambda}{L}\rho \tag{3}$$

où ρ est la portée du sonar.

La résolution latérale est alors donnée par la formule classique :

$$\frac{\lambda}{2L_s} \rho = \frac{L}{2} \tag{4}$$

Lorsque l'antenne physique est elle-même un réseau, ce qui est très fréquent en sonar, les directivités à l'émission et à la réception ne sont plus nécessairement identiques.

On peut, par exemple, élargir le secteur d'émission en émettant avec une portion restreinte 101 de longueur $L_e$ de l'antenne physique 102, et former un ensemble de voies physiques de réception dans ce secteur.

Lorsque l'antenne synthétique est formée avec une voie physique de réception de direction de pointage fixe, découpant un sous-secteur donné de ce secteur d'émission élargi, on obtient un sonar à antenne synthétique dit "monofaisceau" dont les propriétés sont essentiellement équivalentes à l'antenne synthétique simple décrite plus haut pour laquelle les directivités à l'émission et à la réception sont égales. En particulier sa résolution latérale est encore donnée par (4).

En découpant le secteur d'émission en sous-secteurs différents correspondant à un ensemble de voies physiques de réception, on peut former simultanément plusieurs antennes synthétiques monofaisceau que l'on peut ensuite intégrer de manière incohérente. On obtient alors une antenne synthétique dite "multifaisceaux incohérente". Cette antenne a la même résolution latérale que les antennes synthétiques monofaisceau qui la constituent mais l'addition incohérente permet de réduire la variance de la réverbération et d'améliorer la résolution radiométrique de l'image.

L'addition cohérente de ces antennes synthétiques monofaisceau conduit à l'antenne synthétique dite "multifaisceaux cohérente", qui permet de porter la longueur de l'antenne synthétique à :

$$L_s = \frac{\lambda}{L_e}\, \rho \qquad\qquad (5)$$

et par conséquent la résolution latérale à $\frac{L_e}{2}$.

Tous ces modes d'opération, qui sont bien connus, par exemple du brevet US-A-5 412 617, permettent d'obtenir des images améliorées par rapport au mode simple, mais ne modifient en rien la première contrainte (1) qui doit toujours être respectée. Or cette contrainte est en pratique très sévère, notamment pour les systèmes d'imagerie du fond à moyenne portée (typiquement 3000 m pour le système TOBI de SOC [Southampton Oceanographic Center, United Kingdom]) dont on pourrait vouloir diminuer la résolution latérale (celle-ci est d'environ 50 m à 3000 m pour TOBI) par ouverture de synthèse. Ainsi pour des longueurs d'antennes physiques de respectivement L = 3 m, L = 4 m ou L = 5 m, cette première contrainte limite la portée maximale à seulement 1125 m, 1500 m ou 1800 m, même si on opère à la vitesse lente de v = 1m/s typique des sonars remorqués en eau profonde.

Il est donc souhaitable de pouvoir augmenter, par exemple de doubler, la portée maximale de l'antenne synthétique par rapport à celle donnée par (1), même au prix d'une augmentation, par exemple un doublement, de la résolution latérale par rapport à (4). Avec une antenne telle que L = 4 m, on pourrait obtenir des systèmes d'imagerie du fond portant à 3000 m avec une résolution latérale de 4 m. Dans l'état de l'art actuel, on sait que la résolution latérale pour L = 4 m est de 2 m pour le mode d'opération simple et peut être encore réduite, si on le souhaite, par mise en oeuvre du mode multifaisceaux cohérent, mais l'extension de la portée jusqu'à 3000 m nécessite une antenne physique de L = 8 m de long quel que soit le mode retenu, ce qui est impossible à concilier avec les contraintes d'encombrement usuelles.

Il est aussi souhaitable de pouvoir augmenter la vitesse pour une portée donnée.

On connaît [1] par ailleurs d'un brevet français N° 2 412 177 déposé par la société THOMSON-CSF, ayant pour inventeur G. GRALL, un système sonar connu sous le nom de sonar à émission interférométrique, dans lequel on émet simultanément des signaux acoustiques aux deux extrémités de l'antenne de réception. Toutefois, ce système sonar n'est pas utilisé pour former une antenne synthétique.

On connaît aussi un brevet US N° 5,295,118 [2] délivré le 15 mars 1994 à Westinghouse Elec. Corp. aux droits de G.A. GILMOUR, dans lequel est décrit un sonar utilisant lui aussi deux émetteurs situés aux deux extrémités de l'antenne, mais émettant alternativement (alternance à chaque récurrence) dans deux bandes spectrales distinctes. Selon l'inventeur, l'émission alternée permettrait de doubler la couverture horaire par rapport à (1) sans perte de performance. En fait, il n'en est rien. Chaque composante spectrale de l'antenne synthétique est sous-échantillonnée d'un facteur deux, et il en est de même de l'antenne synthétique totale. La perte de performance est donc identique à celle du procédé classique, à émission fixe dans toute la bande spectrale, lorsque (1) n'est plus respecté.

Pour obtenir l'augmentation de portée souhaitée, l'invention propose un sonar latéral à antenne synthétique comprenant une antenne physique de longueur L pour obtenir en fonction de la vitesse de déplacement longitudinal de cette antenne un diagramme de rayonnement synthétique présentant un lobe central et un ensemble de lobes latéraux régulièrement espacés de chaque côté de ce lobe central, et un premier diagramme de rayonnement physique présentant un premier ensemble de zéros situés, compte tenu de ladite vitesse de déplacement, sur certains des dits lobes latéraux, et au moins un premier transducteur, principalement caractérisé en ce qu'il comprend en outre au moins un deuxième transducteur, ces deux transducteurs permettant d'obtenir un deuxième diagramme de rayonnement physique interférentiel présentant un deuxième ensemble de zéros situés, compte tenu de ladite vitesse, sur les autres des dits lobes latéraux qui ne sont pas couverts par le premier ensemble de zéros. Les lobes latéraux et les deux ensembles de zéros précèdents se décalent identiquement avec la fréquence, ce qui permet un fonctionnement en large bande.

Selon une autre caractéristique, ladite antenne physique est utilisée en réception et lesdits premier et deuxième transducteurs sont utilisés en émission.

Selon une autre caractéristique, les ensembles de zéros sont répartis sur les ensembles de lobes latéraux de manière à obtenir une antenne synthétique multifaisceaux.

Selon une autre caractéristique, l'antenne physique est utilisée en émission et les deux transducteurs sont utilisés en réception.

Selon une autre caractéristique, on utilise une partie de ladite antenne physique pour former une sous-antenne comportant les deux dits transducteurs situés aux extrémités de cette portion.

Selon une autre caractéristique, il comprend des moyens permettant d'effectuer des émissions auxiliaires pour effectuer une autofocalisation.

D'autres particularités et avantages de la présente invention apparaîtront plus clairement à la lecture de la description détaillée et des figures annexées qui représentent :

- la figure 1, une vue comparative d'une antenne classique et d'une antenne selon l'invention représentées dans deux positions successives correspondant à un même intervalle de temps;
- la figure 2, un schéma des lobes d'émission et de réception d'un sonar selon l'invention; et
- la figure 3, une vue schématique de la zone de couverture d'une antenne selon l'invention.

Selon l'invention, on utilise, comme représenté sur la figure 1, deux émetteurs distincts 211 et 221 situés aux deux extrémités de l'antenne physique 202 d'un sonar latéral à antenne synthétique pour émettre simultanément des impulsions de fréquence centrale $f_o$ et de bande passante B.

L'analyse des lobes physiques d'émission et de réception à une fréquence quelconque du spectre permet d'apprécier les résultats apportés par cette modification.

Pour voir l'apport de l'émission interférométrique, analysons les lobes physiques d'émission. Seul est modifié le lobe d'émission qui devient :

$$D_e(u) = \mathrm{sinc}\left(\frac{L_e}{\lambda}u\right)\cos\left(\pi\frac{L}{\lambda}u\right) \qquad (7)$$

où $L_e \ll L$ est la dimension d'un émetteur individuel.

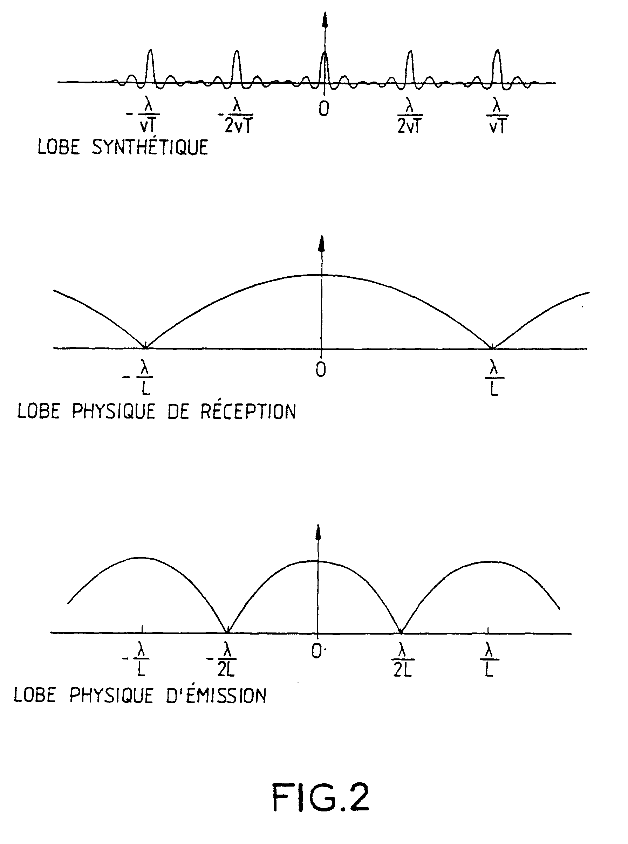

Ce lobe est représenté sur la figure 2 où l'on voit que, contrairement à l'émission classique, il présente des zéros de directivité dans les directions $(2m+1)\frac{\lambda}{2L}$. Ceci apporte une possibilité supplémentaire pour annuler les lobes réseaux de l'antenne synthétique, représentés eux aussi sur la figure 2. Ceux-ci peuvent être annulés par le lobe physique de réception, représenté lui aussi sur la figure 2, qui prend la forme classique (2), dans les directions $2\,m\frac{\lambda}{2L}$ mais aussi par les lobes physiques d'émission comme on le voit sur la figure.

Plus précisément, le produit émission-réception est donné par le produit de (7) et (2) soit :

$$\begin{aligned}D_e(u)\,D_r(u) &= \mathrm{sinc}\left(\frac{L_e}{\lambda}u\right)\cos\left(\pi\frac{L}{\lambda}u\right)\mathrm{sinc}\left(\frac{L}{\lambda}u\right)\\ &= \mathrm{sinc}\left(\frac{L_e}{\lambda}u\right)\mathrm{sinc}\left(\frac{2L}{\lambda}u\right)\end{aligned} \qquad (8)$$

Le dernier terme est identique au lobe de directivité classique d'une antenne physique de longueur double 2L. Il en résulte que les propriétés de l'antenne synthétique à émission interférométrique sont en tout point équivalentes à celles d'une antenne physique de longueur double fonctionnant en mode monofaisceau, la voie de réception étant pointée dans l'axe de l'antenne.

En particulier la condition d'échantillonnage s'écrit :

$$2\,L \geq 2vT \;\; soit \;\; L \geq vT \qquad (9)$$

Il en résulte donc un doublement de la couverture horaire proportionnelle à VT, comme explicité sur la figure 1, par rapport à la condition (1). Quant à la longueur de l'antenne synthétique, elle vaut :

$$L_s = \frac{\lambda}{2L}\,\rho \qquad (10)$$

ceci correspond à une résolution latérale de :

$$\frac{2L}{2} = L \qquad (11)$$

c'est-à-dire le double de celle donnée par (4).

Toutefois, pour opérer sans trous de couverture en vision latérale il faut se trouver dans la zone de recouvrement des couvertures individuelles 302 et 303, donc au-delà de la distance p qui limite cette zone aveugle 301 représentée en hachuré sur la figure 3, ce qui nécessite la condition supplémentaire :

$$vT \leq \frac{\lambda}{2L} \, \rho \qquad (12)$$

soit compte tenu de (9) :

$$\rho \geq \frac{2L^2}{\lambda} = 2L_f \qquad (13)$$

La portée doit donc excéder $2L_f$ et cette condition est le plus souvent vérifiée pour des sonars latéraux qui présentent toujours une zone aveugle en début de portée.

On constate donc que la résolution de l'antenne synthétique à émission interférométrique est toujours au moins deux fois meilleure que celle de l'antenne physique de réception de longueur L car, d'après (13) on travaille au moins à deux fois la distance de Fresnel de celle-ci (à la distance de Fresnel la résolution latérale de l'antenne physique est égale à sa longueur).

L'invention s'applique également aux antennes synthétiques multifaisceaux. En effet, l'identité utilisée plus haut entre le produit émission-réception de l'antenne physique à émission interférométrique et réception classique (en mode monofaisceau pointé dans l'axe) et le même produit pour une antenne physique à émission classique et réception classique avec une antenne de longueur double (également en mode monofaisceau pointé dans l'axe) s'étend directement à toutes les directions de pointage de l'antenne physique de réception coïncidant avec un maximum local de l'émission (7), pour lesquelles :

$$u_{2m} = 2m \frac{\lambda}{2L} \qquad (14)$$

Ces maxima locaux correspondent aux directions des points F tels que :

$$E_1F - E_2F = m\lambda \qquad (15)$$

où $E_1$ et $E_2$ sont les centres de phase des deux émetteurs de l'émission interférométrique.

L'invention s'étend donc à la formation simultanée de M antennes synthétiques à émission interférométrique et réception monofaisceau dans des directions données par (14). Les M antennes synthétiques à émission interférométrique peuvent ensuite être intégrées de manière incohérente pour améliorer en $\sqrt{M}$ la résolution radiométrique. L'intégration cohérente n'est pas intéressante car elle conduit à une antenne synthétique lacunaire.

L'invention peut également être mise en oeuvre en permutant les rôles respectifs de l'émission et de la réception par rapport au système décrit plus haut. On utilise alors une émission classique de la forme (2) et une réception interférométrique sur deux transducteurs aux deux extrémités de l'antenne. Le lobe de directivité en réception est alors donné par (7). Le produit émission-réception de ce système étant également donné par (8), toutes les propriétés qui en découlent, et notamment (9) et (11), sont identiques.

Dans ces conditions, et pour utiliser un vocabulaire commun à ces deux modes d'opération, on désignera ces dispositifs sous le nom d' "antennes synthétiques à transduction interférométrique".

A titre d'exemple de réalisation, on citera un système d'imagerie des fonds à moyenne portée comportant un sonar à antenne synthétique à transduction interférométrique monofaisceau (l'interférométrie étant effectuée indifféremment à l'émission ou à la réception) ou multifaisceaux incohérent fonctionnant à une fréquence centrale de 30 kHz, avec une longueur d'antenne physique de 4 m et se déplaçant à la vitesse de 1 m/s. Ce sonar fonctionne de 640 m ($2L_f$) jusqu'à 3000 m et permet une résolution latérale de 4 m.

L'invention peut être combinée avec une pluralité d'émissions dites auxiliaires car effectuées dans des bandes spectrales disjointes de celle des émissions principales servant à l'imagerie. La demande [4] de brevet français N° 95 10953 déposée par la société THOMSON-CSF le 19 septembre 1995 décrit un procédé de réalisation de telles émissions auxiliaires qui peut donc être combiné avec l'invention présente dans le but de faciliter la compensation des effets parasites dus aux mouvements du porteur et aux fluctuations du milieu.

La demanderesse a également décrit dans cette demande de brevet français N° 95 10953 un procédé d'autofocalisation d'un sonar à antenne synthétique classique exploitant deux émetteurs auxiliaires dont les centres de phase sont aussi espacés que possible, et donc au plus de L. Ces émissions auxiliaires sont effectuées dans des sous-bandes spectrales disjointes de celle servant à l'imagerie et sont de plus disjointes entre elles, ce qui permet de séparer les trois émissions par un filtrage convenable en réception On montre alors qu'il existe toujours, pour un couple de récurrences donné, une sous-bande spectrale auxiliaire pour laquelle le mouvement nominal du centre de phase du sonar (lieu géométrique milieu du centre de phase de l'émetteur auxiliaire considéré et de l'antenne physique de réception) est nul. En effet, l'alternance des émissions auxiliaires permet de faire la synthèse d'un mouvement latéral de l'émission de L, lequel vient exactement compenser le mouvement nominal de $vT = \frac{L}{2}$ du porteur. On obtient alors une forte corrélation des signaux reçus pour deux récurrences consécutives, ce qui facilite l'estimation des paramètres nécessaires à la focalisation.

Suivant une variante de réalisation, on combine ce procédé d'autofocalisation avec le procédé de la présente invention. Le fait que l'on se déplace deux fois plus vite pour l'antenne synthétique à transduction interférométrique que pour l'antenne synthétique classique amène à modifier la réalisation précédente. Pour compenser par un mouvement opposé à l'émission le mouvement latéral du porteur, nominalement vT = L soit le double du précédent, il faudrait que les émetteurs auxiliaires soient séparés de 2L, alors que la séparation maximale est, comme on l'a vu, égale à L. On effectue alors cette compensation en superposant au mouvement d'amplitude L de l'émetteur auxiliaire un mouvement additionnel d'amplitude L en réception. Pour cela, on choisit en réception un sous-ensemble de M transducteurs parmi les P de l'antenne physique de réception, que l'on déplace électroniquement de P-M transducteurs dans le sens opposé du mouvement du porteur, comme décrit dans le brevet français N° 2 675 587 [5] délivré le 23 octobre 1992 au nom de THOMSON-CSF où cette technique est utilisée dans un tout autre but. On synthétise ainsi un déplacement en réception proche de L en choisissant M=1 et en diminuant le pas entre les transducteurs pour synthétiser une sous-antenne quasi ponctuelle.

Le procédé d'autofocalisation connu de la demande de brevet [4] s'applique cependant d'autant mieux que la sous-antenne est grande. Aussi, selon une autre variante, on réduit le mouvement latéral nominal du porteur vT à une quantité D strictement plus petite que L, le principe de la transduction interférométrique restant applicable dans ce cas-là. Pour cela, on utilise pour la transduction interférométrique elle-même, une portion réduite dans la fraction $\frac{D}{L}$ de l'antenne physique de réception. Autrement dit, le procédé d'autofocalisation est utilisé avec une sous-antenne de taille 2 (L - vT), et le gain en couverture horaire permis par la transduction interférométrique est égal à $2\frac{D}{L}$ (pour D=L, on retrouve le facteur 2).

Dans le cas où on réalise une antenne synthétique interférométrique à l'émission, les émetteurs auxiliaires et les émetteurs principaux peuvent être confondus afin de réduire le nombre total d'émetteurs nécessaires. La combinaison des émissions principales et auxiliaires précédentes conduit alors à émettre simultanément des codes différents aux deux extrémités de la base interférométrique d'émission, les codes émis par un émetteur donné étant de plus variables d'une récurrence à la suivante. Ces différences de choix n'ont aucune importance pour l'imagerie elle-même : en effet, après filtrage dans la sous-bande principale, les codes émis sont identiques, ce qui n'est pas le cas du procédé décrit dans le brevet [2] cité plus haut.

**Revendications**

**1.** Sonar latéral à antenne synthétique comprenant au moins un premier transducteur (211) et une antenne physique (202) de longueur L pour obtenir en fonction de la vitesse de déplacement longitudinal de cette antenne un diagramme de rayonnement synthétique présentant un lobe central et un ensemble de lobes latéraux régulièrement espacés de chaque côté de ce lobe central, et un premier diagramme de rayonnement physique présentant un premier ensemble de zéros situés, compte tenu de ladite vitesse de déplacement, sur certains des dits lobes latéraux, caractérisé en ce qu'il comprend en outre au moins un deuxième transducteur (221), qui en combinaison avec le premier transducteur permet d'obtenir en fonction de ladite vitesse un deuxième diagramme de rayonnement physique interférentiel présentant un deuxième ensemble de zéros situés sur ceux des dits lobes latéraux qui ne sont pas couverts par le premier ensemble de zéros, ce qui permet d'augmenter ladite vitesse jusqu'à une valeur double de celle possible pour un sonar ne comportant qu'un seul des dits transducteurs.

**2.** Sonar selon la revendication 1, caractérisé en ce que ladite vitesse est choisie pour que les zéros du premier ensemble soient situés sur les lobes latéraux de rang pair et les zéros du deuxième ensemble sur les lobes latéraux de rang impair.

3. Sonar selon l'une quelconque des revendications 1 et 2, caractérisé en ce que ladite antenne physique (202) est utilisée en réception et que lesdits premier et deuxième transducteurs (211, 221) sont utilisés en émission.

4. Sonar selon la revendication 3, caractérisé en ce que les ensembles de zéros sont répartis sur les ensembles de lobes latéraux de manière à obtenir une antenne synthétique multifaisceaux.

5. Sonar selon l'une quelconque des revendications 1 et 2, caractérisé en ce que l'antenne physique est utilisée en émission et que les deux transducteurs sont utilisés en réception.

6. Sonar selon l'une quelconque des revendications 1 à 5, caractérisé en ce que l'on utilise une partie de ladite antenne physique (202) pour former une sous-antenne comportant les deux dits transducteurs (211, 221) situés aux extrémités de cette portion.

7. Sonar selon l'une quelconque des revendications 1 à 6, caractérisé en ce qu'il comprend des moyens permettant d'effectuer des émissions auxiliaires pour effectuer une autofocalisation,

8. Sonar selon la revendication 7, caractérisé en ce qu'il comprend des moyens pour sélectionner parmi les P transducteurs de l'antenne un sous-ensemble de M transducteurs et des moyens pour le déplacer électroniquement dans le sens opposé au mouvement du porteur de P-M transducteurs .

9. Sonar selon la revendication 7, caractérisé en ce que l'on réduit le mouvement latéral nominal du porteur à une quantité D strictement plus petite que L et en ce que l'on n'utilise pour effectuer la transduction interférométrique qu'une portion de l'antenne physique de réception réduite dans la fraction $\frac{D}{L}$.

10. Sonar selon l'une quelconque des revendications 7 à 9, caractérisé en ce que l'on utilise des transducteurs communs pour effectuer les émissions auxiliaires et principales, et que l'on sépare les émissions en utilisant des codes distincts.

**Patentansprüche**

1. Seitensicht-Sonargerät mit einer synthetischen Antenne, die mindestens einem ersten Transduktor (211) aufweist, sowie mit einer physischen Antenne (202) einer Länge L, um abhängig von der Bewegungsgeschwindigkeit dieser Antenne in Längsrichtung ein synthetisches Strahlungsdiagramm mit einer zentralen Keule und einer Gruppe von gleichmäßig zu beiden Seiten dieser zentralen Keule verteilten Nebenkeulen und ein erstes physisches Strahlungsdiagramm mit einer ersten Gruppe von Nullstellen zu erhalten, die unter Berücksichtigung der Bewegungsgeschwindigkeit auf bestimmten dieser Nebenkeulen sitzen, dadurch gekennzeichnet, daß es außerdem mindestens einen zweiten Transduktor (221) enthält, der in Verbindung mit dem ersten Transduktor und abhängig von der Bewegungsgeschwindigkeit ein zweites physisches Interferenz-Strahlungsdiagramm zu erhalten erlaubt, das eine zweite Gruppe von Nullstellen besitzt, die sich an den Stellen derjenigen Nebenkeulen befinden, die nicht durch die erste Gruppe von Nullstellen überdeckt sind, sodaß die Geschwindigkeit bis zu einem Wert gesteigert werden kann, der dem Doppelten der Geschwindigkeit entspricht, die für ein Sonargerät mit nur einem derartigen Transduktor möglich ist.

2. Sonargerät nach Anspruch 1, dadurch gekennzeichnet, daß die Geschwindigkeit so gewählt ist, daß die Nullstellen der ersten Gruppe auf den Nebenkeulen geradzahligen Rangs und die Nullstellen der zweiten Gruppe auf den Nebenkeulen ungeradzahligen Rangs liegen.

3. Sonargerät nach einem beliebigen der Ansprüche 1 und 2, dadurch gekennzeichnet, daß die physische Antenne (202) empfangsseitig und die beiden Transduktoren (211, 221) sendeseitig verwendet werden.

4. Sonargerät nach Anspruch 3, dadurch gekennzeichnet, daß die Gruppen von Nullstellen über die Gruppen von Nebenkeulen so verteilt sind, daß sich eine synthetische Mehrfachstrahl-Antenne ergibt.

5. Sonargerät nach einem der Ansprüche 1 und 2, dadurch gekennzeichnet, daß die physische Antenne sendeseitig und die beiden Transduktoren empfangsseitig verwendet werden.

6. Sonargerät nach einem beliebigen der Ansprüche 1 bis 5, dadurch gekennzeichnet, daß man einen Teil der phy-

**EP 0 944 844 B1**

sischen Antenne (202) zur Bildung einer Unterantenne verwendet, die die beiden Transduktoren (211, 221) an den Enden dieses Teils enthält.

**7.** Sonargerät nach einem der Ansprüche 1 bis 6, dadurch gekennzeichnet, daß es Mittel aufweist, die Hilfsemissionen zur Autofokussierung bewirken können.

**8.** Sonargerät nach Anspruch 7, dadurch gekennzeichnet, daß es Mittel, um unter den P Transduktoren der Antenne eine Untereinheit von M Transduktoren auszuwählen, sowie Mittel aufweist, um diese Untereinheit elektronisch in entgegengesetzter Richtung zur Bewegung des Trägers von P-M Transduktoren zu verschieben.

**9.** Sonargerät nach Anspruch 7, dadurch gekennzeichnet, daß man die seitliche Nennbewegung des Trägers um einen Wert D deutlich kleiner als L verringert und daß man für die Durchführung der interferometrischen Transduktion nur einen im Verhältnis D/L verringerten Teil der physischen Empfangsantenne verwendet.

**10.** Sonargerät nach einem beliebigen der Ansprüche 7 bis 9, dadurch gekennzeichnet, daß man zur Durchführung der Hilfs- und Hauptemissionen gemeinsame Transduktoren verwendet und daß man die Emissionen unter Verwendung unterschiedlicher Kodes voneinander trennt.

## Claims

**1.** Synthetic-antenna side sonar comprising at least one first transducer (211) and a physical antenna (202) of length L for obtaining, as a function of the speed of longitudinal movement of this antenna, a synthetic radiation diagram having a central lobe and a set of side lobes regularly spaced on each side of this central lobe, and a first physical radiation diagram having a first set of zeros lying, taking the said speed of movement into account, on certain of the said side lobes, characterized in that it furthermore includes at least one second transducer (221) which, in combination with the first transducer, makes it possible to obtain, as a function of the said speed, a second, interferential physical radiation diagram having a second set of zeros lying on those of the said side lobes which are not covered by the first set of zeros, this making it possible to increase the said speed to a value twice that possible for a sonar having only one of the said transducers.

**2.** Sonar according to Claim 1, characterized in that the said speed is chosen so that the zeros of the first set lie on the side lobes of even rank and the zeros of the second set lie on the side lobes of odd rank.

**3.** Sonar according to either one of Claims 1 and 2, characterized in that the said physical antenna (202) is used in reception and in that the said first and second transducers (211, 221) are used in transmission.

**4.** Sonar according to Claim 3, characterized in that the sets of zeros are distributed over the sets of side lobes so as to obtain a multibeam synthetic antenna.

**5.** Sonar according to either one of Claims 1 and 2, characterized in that the physical antenna is used in transmission and in that the two transducers are used in reception.

**6.** Sonar according to any one of Claims 1 to 5, characterized in that a part of the said physical antenna (202) is used to form a subantenna including the two said transducers (211, 221) lying at the ends of this portion.

**7.** Sonar according to any one of Claims 1 to 6, characterized in that it comprises means allowing auxiliary transmissions to be made in order to perform autofocusing.

**8.** Sonar according to Claim 7, characterized in that it comprises means for choosing, among the P transducers of the antenna, a subset of M transducers and means for electronically moving it in the opposite direction to the motion of the carrier of P-M transducers.

**9.** Sonar according to Claim 7, characterized in that the nominal side motion of the carrier is reduced to a quantity D strictly smaller than L, and in that for performing the interferometric transduction only a portion of the physical reception antenna reduced in the ratio $\frac{D}{L}$ is used.

**10.** Sonar according to any one of Claims 7 to 9, characterized in that common transducers are used to make the auxiliary and main transmissions, and in that the transmissions are separated by using distinct codes.

$L_T$

102  101  103

$VT = L_r/2$

ANTENNE CLASSIQUE

211  202  221

$VT = L_r$

ANTENNE INTERFÉROMÉTRIQUE : VITESSE DOUBLE

# FIG.1

303

$\lambda/2 L_r$

VT

301

302

P

# FIG.3

LOBE SYNTHÉTIQUE

LOBE PHYSIQUE DE RÉCEPTION

LOBE PHYSIQUE D'ÉMISSION

# FIG.2